# EUROPEAN PATENT SPECIFICATION

(11) **EP 0 408 528 B1**
(45) Date of publication and mention of the grant of the patent: **04.05.1994**
(21) Application number: 90830322.5
(22) Date of filing: 11.07.1990
(51) Int. Cl.: B01D 53/36, B01J 23/62

(54) **Preparation process of an oxidation catalyst for gas decomposition**
Herstellungsverfahren eines Oxidationskatalysators zur Gaszerlegung
Procede de preparation d un catalyseur d'oxydation pour la décomposition de gaz

(30) Priority: 11.07.1989 JP 178353/89
(43) Date of publication of application: 16.01.1991
(73) Proprietor: TANAKA KIKINZOKU KOGYO K.K., Chuo-ku Tokyo 103 (JP); Furuya, Nagakazu, Kofu-shi Yamanashi (JP); Shibata, Masami, Kofu-shi, Yamanashi (JP)
(72) Inventor: Furuya, Nagakazu, Kofu-shi, Yamanashi (JP); Shibata, Masami, Kofu-shi, Yamanashi (JP)
(74) Representative: Pellegri, Alberto

(56) References cited:
- EP-A- 0 129 406
- EP-A- 0 266 875
- FR-A- 2 203 676

## Description

The present invention relates to a method for makingan oxidation catalyst for decomposing a compound such as carbon monoxide, formalin in a gas including oxygen for use in an air cleaner, a combustion gas cleaner or purifier, a gas sensor, a deodorizer, a gas refiner or the like.

Conventionally, a precious metal such as platinum, palladium or the like is used as an oxidation catalyst for decomposition of a harmful gas such as carbon monoxide, formalin or formaldehyde or the like in a gas including oxygen. EP-A-0129406 discloses a catalytic device for purifying a carbon nonoxide containing atmosphere characterized by using a bed of catalyst particles consisting essentially of a platinum group metal in combination with tin dioxide.

The presence of an oxide of a base metal, for example: tin, is known to prevent agglomeration of particles of noble metal as disclosed in EP-A-0266875. Known oxidation catalysts exhibit a satisfactory oxidation ability at a high temperature of approximately 400 °C, but their activity at low temperature is rather low, which restricts its utilization and application range or fields.

### SUMMARY OF THE INVENTION

Accordingly, it is an object of the present invention to provide an oxidation catalyst for decomposition of a harmful compound such as carbon monoxide, formalin or the like in a gas including oxygen, free from the aforementioned defects and disadvantages of the prior art, which is capable of performing at a low temperature range between a room temperature to approximately 150 °C.

In accordance with one aspect of the present invention, there is provided a method for preparing an oxidation catalyst for decomposing chemical compounds, comprising at least one precious metal of platinum, palladium, iridium and rhodium, and tin covering the precious metal, a surface covering rate of the tin being approximately 10 to 90% with respect to the precious metal.

### BRIEF DESCRIPTION OF THE DRAWING

The above and other objects, features and advantages of the present invention will more fully appear from the following description of the preferred embodiment with reference to the accompanying drawings, in which:
Fig. 1 is a graphical representation illustrating a relation between a tin covering rate and a reaction rate in one example using an oxidation catalyst according to the present invention; and
Fig. 2 is a graphical representation illustrating a relation between a temperature and a reaction rate in a comparative example using a conventional oxidation catalyst.

### DESCRIPTION OF THE PREFERRED EMBODIMENTS

The present invention will be described in detail in connection with its preferred embodiments with reference to the accompanying drawings.

An oxidation catalyst for decomposition of a harmful gas such as carbon monoxide, formalin or formaldehyde or the like made according to the present invention includes one of precious metals such as platinum, palladium, iridium and rhodium and tin, and the surface covering rate of tin with respect to the precious metal is approximately 10 to 90%.

At least one metal black of platinum, palladium, iridium and rhodium constituting a component of the oxidation catalyst is prepared by electrolysis of a chloride solution of the metal. After cleaning the obtained metal black by using dilute sulfuric acid solution, tin atom is deposited over the surface of the cleaned metal black in an electrolytic solution including a tin compound so that a surface covering rate of the tin with respect to the metal black is approximately 10 to 90%, to obtain a tin-modified catalyst. The tin-modified catalyst is then washed by water in inert gas atmosphere and is then dried at below 100 °C to obtain an oxidation catalyst according to the present invention.

The surface covering rate of the tin with respect to the metal black is preferably determined to approximately 10 to 90% in order to oxidize to decompose a harmful gas such as carbon monoxide, formalin or the like in a gas including oxygen at a low temperature range between a room temperature and approximately 150 °C by using the obtained oxidation catalyst according to the present invention.

When the surface covering rate of the tin with respect to the metal black is less than 10%, the oxidation ability can not be obtained at the above described low temperature, and, when the surface covering rate of the tin with respect to the metal black is more than 90%, the oxidation speed is not sufficient.

By contacting a mixture gas including the oxygen and the harmful gas such as carbon monoxide, formalin or the like with the oxidation catalyst of the present invention, the harmful gas can be oxidized to carbon dioxide or the like. The oxygen amount in the mixture gas is at least equivalent amount for completely oxidizing the harmful gas such as the carbon monoxide, the formalin or the like, and hence there in no need to add an excess amount of oxygen more than the amount required for the complete oxidation into the mixture gas.

In practice, a tin compound may be coated on a precious metal such as platinum, palladium, iridium or rhodium carried on a catalyst carrier.

Examples of the present invention will now be described in detail, and the present invention is not restricted to the Examples.

### Example 1:

A platinum wire having a diameter of 0.3 mm was attached under pressure to a platinum net having a dimension of 37 mm x 50 mm for an electrochemical treatment. An electrodeposition of the platinum net was carried out in a solution including 3% by weight of chloroplatinic acid and 0.03% by weight of lead acetate to deposit platinum black on the platinum net. Anode-cathode treatment of the resulted platinum net was repeated to clean it in an electrochemical manner in 0.5M (M-mol/dm³) of sulfuric acid solution as an electrolytic solution.

The true surface area of the platinum black was 1266.7 cm², and the roughness factor of the same was 19. 28.

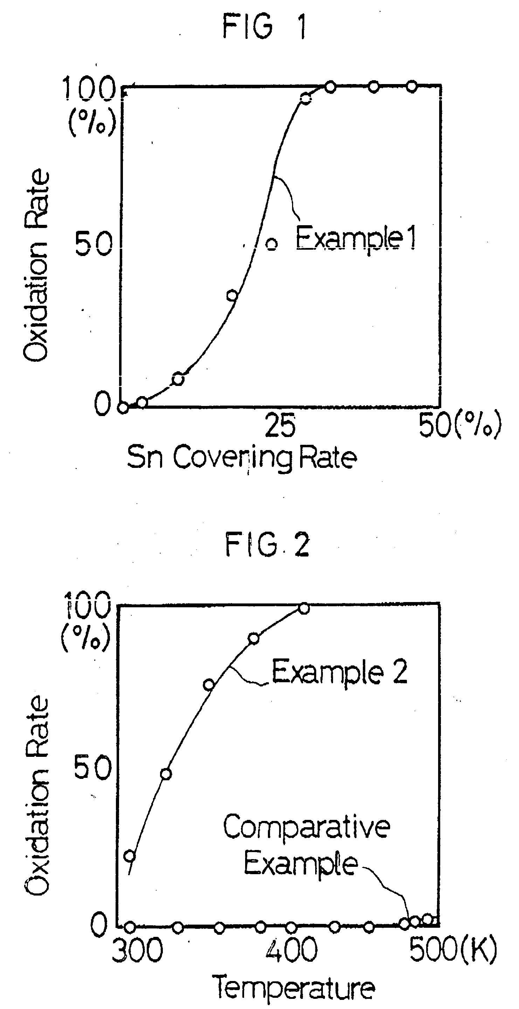

Tin atom was deposited on the obtained platinum net in 0.5M of sulfuric acid electrolytic solution including 10⁻⁵ to 10⁻⁴M of tin sulfate at a deposition potential of 0.2V vs. RHE to prepare a tin-modified platinum catalyst. In this embodiment, by varying the deposition time, 8 kinds of tin-modified platinum catalysts having different tin covering rates were prepared, as shown in Fig. 1.

The obtained tin-modified platinum catalysts were washed by water in an argon gas atmosphere to remove the sulfuric acid component, and then the washed tin-modified platinum catalysts were dried at 80 °C while an argon gas was circulated.

Each of 8 dried tin-modified platinum catalysts was filled up in a reaction tube having a dimension of an internal diameter of 8 mm x a length of 37 mm to obtain a reactor. Then, a mixture gas of CO + O₂ + He at a mixture ratio of 3:2:28 was flowed in the reactor at a flow speed of 6.6 ml/min. to carry out a quantative analysis of CO, O₂ and CO₂ at a temperature of approximately 290 to 430K by using gas chromatography. As a result, as shown in Fig. 1, the oxidation rate of 100% was obtained at the tin covering rate of 35%.

The tin covering rate was measured from reduction of hydrogen elimination wave by using a single pulse method (potential sweep speed of 0.01 V/s). The true surface area of the platinum black was 366.7 cm² and the roughness factor of the same was 5.58.

### Example 2:

A tin-modified platinum catalyst having a tin covering rate of 94% was prepared in the same manner as Example 1 and was filled up in the reaction tube to obtain a reactor in the same manner as Example 1. Then, a mixture gas of CO + O₂ + He at a mixture ratio of 3:2:28 was flowed in the reactor at a flow speed of 6.6 ml/min., and CO oxidation reaction rate was measured at a certain reaction temperature of an absolute temperature range between 290 and 430K. A quantative analysis of CO, O₂ and CO₂ was carried out by using the gas chromatography. As a result, as shown in Fig. 2, the CO oxidation rate of 100% was obtained at the absolute temperature of 420K.

### Comparative Example:

By using a platinum catalyst prepared in the same manner as Example 2, except that no tin was coated, a test was carried out in the same manner as Example 2 except a reaction temperature of an absolute temperature rage between 290 and 495K. In this case, as shown in Fig. 2, the CO oxidation rate was 2% at the absolute temperature of 490K.

### Example 3:

A test was carried out in the same manner as Example 1 using a tin-modified catalyst, except that palladium black, iridium black or rhodium black was deposited on the platinum net by the electrodeposition, to obtain the same effects and advantages as those of the Example 1.

### Example 4:

By using the tin-modified platinum catalyst prepared in Example 2, a test was carried out in the same manner as Example 2, except a mixture gas of HCHO + O₂ at a mixture ratio of 1:10 was used. In this case, the oxidation rate of HCHO was 100% at the absolute temperature of 320K.

It is readily understood from the above description that the harmful gas such as carbon monoxide, formalin or the like can be oxidized and decomposed at a low temperature of a room temperature to approximately 150 °C by using a tin-modified oxidation catalyst according to the present invention. Hence, this catalyst can be widely used in various fields.

## Claims

1. A process of preparing an oxidation catalyst for decomposing chemical compounds, comprising:
preparing at least one metal black of a precious metal belonging to the group composed of platinum, palladium, iridium and rhodium; and
electrodepositing tin atoms over the surface of said precious metal black in an electrolytic solution containing a tin compound until a surface covering rate of tin comprised between 10 to 90 atomic % is obtained.

## Patentansprüche

1. Verfahren zur Erzeugung eines Oxidationskatalysators zur Unterstützung chemischer Verbindungen, umfassend die Erzeugung wenigstens eines Metallstaubs aus Edelmetall aus der Gruppe Platin, Palladium, Iridium und Rhodium und Elektroabscheidung von Zinnatomen auf der Oberfläche dieses Edelmetallstaubs in einer elektrolytischen Lösung, enthaltend eine Zinnverbindung, bis die Oberflächenüberzugsrate, im Bereich zwischen 10 und 90 Atom-%, erreicht wurde.

## Revendications

1. Procédé de préparation d'un catalyseur d'oxydation pour la décomposition de composés chimiques, comprenant :
la préparation d'au moins un noir de métal d'un métal précieux appartenant au groupe constitué par le platine, le palladium, l'iridium et le rhodium; et
l'électrodéposition d'atomes d'étain sur la surface dudit noir de métal précieux dans une solution électrolytique contenant un composé à base d'étain jusqu'à ce qu'un taux de recouvrement superficiel par l'étain compris entre 10 et 90% atomique soit obtenu.
